# EUROPEAN PATENT APPLICATION

(11) **EP 3 943 409 A1**
(43) Date of publication of application: **26.01.2022**
(21) Application number: 20187636.4
(22) Date of filing: 24.07.2020
(51) Int. Cl.: B65D 43/02

(54) **PAPER LID**

(71) Applicant: SEDA INTERNATIONAL PACKAGING GROUP SPA, 80022 Arzano Napoli (IT)
(72) Inventor: D'Amato, Gianfranco, 80022 Arzano Napoli (IT)
(74) Representative: Grünecker Patent- und Rechtsanwälte PartG mbB

(57) **Abstract**

The invention is directed to a paper lid for a paper container. Such a container may be a paper cup. According to the present invention, the paper lid is made of a single paper blank. The lid comprises a central and essentially flat lid panel and an outer fitting flange provided along a circumference of the lid panel, said fitting flange interlocking with an upper rim of the container and providing a nesting means for stacking lids. Such a lid is easily recyclable and simultaneously can be fit onto an upper rim of corresponding container, wherein the same part used for interlocking with the upper rim also provides a nesting means for stacking the lids.

## Description

The invention is directed to a paper for a paper container, such as a paper cup made of a single paper blank.

Until now, there are a number of paper lids that are made of plastic material like polyethylene or the like and are used together with a paper container or paper cup. Those lids can be used for cold or hot beverages, can be easily be fitted on an upper rim of the container and generally are also sufficiently sealed with respect to this rim, such that any spilling of beverage is prevented even in case the container topples or falls down.

However, such known lids are disadvantageous, as they are made of a material that is not recyclable or for which recycling is quite difficult.

According to the present invention, now a paper lid is proposed that is made of a single paper blank, said lid comprising a central and essentially flat lid panel and an outer fitting flange provided along a circumference of the lid panel. The fitting flange interlocks with an upper rim of the container and provides a nesting means for stacking lids.

This means, according to the present invention, only a single paper blank is used, which can be made of paper, carton or the like. The material of this blank is recyclable and it is, in particular, not necessary to assemble the lid from two or more parts, but it is made from just a single paper blank. The central and essentially flat lid panel is closing a corresponding container at the top and the panel can also be used for arranging a printing, a present, or any other means that might be used with a lid.

To provide interlocking between lid and upper rim of the container, which is also sufficiently sealed to avoid any spilling of beverage, the lid further comprises an outer fitting flange provided along the circumference of the lid panel. This fitting flange interlocks with the upper rim of the container. The interlocking is fluid dense and is sufficiently strong to avoid any spilling of beverage in case the container tumbles or falls down.

Another problem with lids is generally the storing of same, wherein in general a number of lids are stacked one above the other. This might result in some difficulty separating the lids from each other, in particular while using only one hand of a corresponding user. For this reason, the paper lid also provides a nesting means for stacking lids. Accordingly, it is possible to stack a number of lids, but it is easily possible to separate same without any force and, in particular, without using two hands.

It further has to be considered that there might be some feedback for the user to inform him that the lid is correctly fitted on the paper cup. To provide such feedback, the fitting flange will provide some audible snapping effect when fitted on the rim of the paper container or will at least provide some haptic feedback that informs the user that he has correctly fitted the paper lid onto the paper container.

Moreover, the paper lid according to the present invention is only made of paper and not of plastic material, such that recycling is easily possible.

The fitting flange may have different shapes, but in view of the material used for the lid and in view of simplicity in shaping the lid, there is one embodiment according to which the fitting flange has an inverted U-shape with a first U-leg upwardly extending from the lid panel, a second U-leg downwardly extending and a U-web connecting first and second U-legs. Such a fitting flange can be easily formed from the single paper blank without stressing the material too much and without forming wrinkles during the shaping of this fitting flange. Such wrinkles might be detrimental with respect to fluid density concerning a paper lid fitted onto a paper container.

To allow the arrangement of the upper rim of the paper container directly between the U-legs, it is feasible that the fitting flange has a conical groove increasing in width between first and second U-legs from the U-web in downward direction. This is groove is used for inserting the upper rim and this will then interlock with the conical groove as soon as the width of the groove corresponds or is smaller than the diameter of the rim. This means that the rim is pushed into the groove and will then finally be arranged quite close to the U-web, such that the rim is enclosed by the two U-legs and the U-web to provide corresponding fluid density.

In general, it is possible that the length of the U-legs is the same. However, to have a flat lid panel that is not too deeply embossed and that has not to be inserted too much into the opening of the paper container, it might recommendable that the second U-leg is longer than the first U-leg. In such a way, the rim of the paper container might first come into engagement with the inner surface of the second U-leg and will then be guided along the surface until it enters the corresponding groove and also comes into contact with the first U-leg and finally also with the U-web.

As the first U-leg is shorter than the second U-leg, the corresponding flat lid panel is arranged higher than, for example, a lower end of the second U-leg. To provide some additional means for introducing the rim and also for fitting the paper lid onto the container, it is further possible that the second U-leg includes an outwardly extending end flange.

It is possible that both U-legs extend in vertical direction or that both are inclined with respect to the vertical direction. However, it I might be preferable if one U-leg extends essentially in vertical direction and the other U-leg is inclined. One possibility is that the first U-leg is the inclined one and that the second U-leg is the vertical one. This means that the inner surface of the first U-leg is then, for example, adapted to come into contact with a corresponding side wall of a paper container, which is in general similar to a truncated cone. However, it is also possible that the first U-leg is vertical and that second U-leg is inclined. With such an arrangement, the upper rim of the container is guided by the second U-leg and there is some kind of alignment of the rim with respect to the lid by this inclination of the second U-leg. To provide a better locking effect on the rim of the container, it is further possible that the second U-leg comprises a groove within its outer surface resulting in an inwardly directed indentation. This groove will then provide, for example, an audible snapping effect when fitting the lid onto the rim. Moreover, such groove and corresponding indentation will ensure a stronger fitting on the cup and will improve the density, such that there will be leakage when tilting the container or the like.

It is further possible that a restriction space is formed between the second U-leg above the indentation, the U-web and the first U-leg. This restriction is, in particular, used for arranging the rim therein and enclosing the rim in an improved dense manner.

In this respect, it also has to be considered that such audible snapping is quite helpful some customers in order to ensure correct fitting by crew in a restaurant or the like.

It might be further possible that a distance between indentation and U-leg is smaller than a diameter of the upper rim of the container. This will improve the snapping effect, as there will be a corresponding deflection of the groove indentation to the outside when the upper rim of the container is introduced in this small area. Moreover, there will be a back deflection of the second U-leg after the rim has passed the indentation, which will improve the snapping effect.

Moreover, according to the above features, it is easily possible that the lid is refitted more than once on the same cup as, according to the construction of the restriction space or the corresponding groove, such refitting is improved, even in case the lid is made of paper.

In view of the different lengths of the U-legs, it also has to be considered that, according to the relatively small embossment of the central panel of this lid, there will be no particular reduction of volume capacity of the container. Otherwise, it might be possible that this central panel is quite deeply inserted into the container, which will, of course, result in a reduction of the full volume available. It also has to be considered that there are different paper containers or paper cups that have slightly different conicities and which, in particular, have different volumes, which means different heights. To provide a paper that might also be used for those different container sizes or cup sizes or, it may be advantageous that the lid is multi-fit lid and, in particular, first and/or U-legs are elastically deflectable to be adaptable to different inclinations of a container wall. Such different inclinations result from the different conicities of containers with different volumes. This means, according to the present application, the lid is not dependent on the container or cup size and it is possible to use the lid for a large variety of conicities of different containers or cups having different volumes.

Nevertheless, according to the features already mentioned above, there will always be a sufficient density between paper lid and container or cup independent from the size of the container/cup or the conicity of the container wall.

It was already said that the first and the second U-legs may be spaced from each other. However, it is also possible that upper portions of first and second U-legs are pressed together and/or are connected to each other to obtain an upwardly extending drink flange. This drink flange is generally a double-layered structure comprising the upper portions of first and second U-legs and will generally further increase the stability of the lid, which might be considered as advantageous in view of the paper material only used for such lid.

Moreover, the drink flange can also be used for holding any spilled beverage on the lid panel and may further be used as some kind drinking support, in particular, if the beverage is directly drunk through the lid without using a straw or the like.

It is, of course, possible to press together and/or connect just upper portions of first and second U-legs, but it is also possible that the length of the drink flange corresponds essentially to the length of the first U-leg. This means that upper portion of the second U-leg is pressed together with all of the first U-leg and/or is connected to this one. This will further increase the stability of the drink edge or also the lid.

It is possible that the lower portion of the second U-leg, which means, in particular, a lower portion not connected or pressed together with the first U-leg, has an inner diameter bigger than an inner diameter of the upper portion of the second U-leg as part of the drink flange. This means that the drink flange is arranged, in general, inside with respect to the upper rim of the container/cup and lower portion of the second U-leg will provide some haptic feedback to a user of the container or cup when using the drink edge for drinking.

The corresponding upper and lower portions of the second U-leg may be connected by a step-like transition. However, it might be recommendable that an outwardly inclined transition portion is arranged between lower and upper portions of the second U-leg. This means that corresponding transition portion is not, for example, extending radially outwardly with respect to the panel, but has an inclined arrangement, which might be recommendable in view of shaping of this transition portion and avoiding any wrinkles or the like.

Moreover, this transition portion may be used for stacking of the containers, see the later discussion.

It is now possible that lower and upper portions of the second U-leg extend essentially in the same direction, inclined or in vertical direction. This means that the two portions are parallel to each other. It is also possible that, for example, the lower portion of the second U-leg extends essentially in vertical direction, which would simplify the shaping of the lid, as any tools for shaping are formed for such bending in vertical direction instead of again also inclining the lower portion of the second U-leg.

The corresponding groove already mentioned above may be formed in the lower portion of the second U-leg and, in particular, in the middle of this lower portion. According to such arrangement, it is possible to guide the upper rim of the container/cup along the inner surface of the second U-leg to then deflect same when sliding along the indentation formed by the groove, wherein then there will a snapback effect after the rim has passed this indentation.

It is, of course, also possible to form the lid without a corresponding groove and indentation and, according to another embodiment, it is possible that the lower portion of the second U-leg extends essentially in vertical direction and comprises an inwardly folded end portion. The inwardly folded end portions then reduce the diameter of the lid, such that by this double-walled structure the inner diameter of the second U-leg is decreased to provide a corresponding snapping effect with respect to the upper rim of the container/cup. It is possible that the inwardly folded end portion is upwardly inclined without any contact with the non-folded second U-leg. This will provide some flexibility and also quite a good fixing of the upper rim, wherein the inwardly folded end portion might spring back after the rim has passed, such that there will be quite a good fixing of the lid with respect to the container/cup. However, in case the lid should be easily releasable with respect to this rim, it might be advantageous if the end portion of the second U-leg, which means the inwardly folded end portion is, in particular, in abutment with an inner surface of the non-folded second U-leg. Moreover, it is also possible that both are connected to each other. This will prevent any snapping back of the inwardly folded end portion after the rim has passed.

However, there still will be some snapping or interlocking, as an upper end of the end portion or inwardly folded end portion can be considered such interlocking means for the rim of the container.

This means that after fitting the lid onto the container, this upper end will provide some resistance for the rim in case the lid is released from same.

It is, of course, possible to release the lid from the container and to use the corresponding opening of the container for drinking a corresponding beverage. However, in general, the lid will stay on the container and there will be some other means for drinking the beverage, such that there is the possibility that the lid panel comprises a cross-cut for a straw, a sip hole, an openable pre-cut and/or an, in particular, foldable closing flap. This means that the cross-cut can be used for inserting a straw, wherein the cross-cut may be a cut that is only cut through half or less of the blank, such that some force is need to insert the straw, but the cross-cut will then still provide some density, as it is not a completely through the paper. However, it is, of course, also possible that the cross-cut actually cuts the paper. Moreover, there might be an open sip hole already provided in the lid panel that can directly be used for drinking together with, for example, the drink edge mentioned above. It is also possible that there is some pre-cut part of the panel that might be pressed into the container for opening a corresponding sip hole and it is further possible that there is some kind of a closing flap that might also be some pre-cut. Such foldable closing flap may be folded after pressing it into the container and then moving it back above the plane of the panel. The flap can be connected to the panel by a bending line, wherein there might be a further bending line parallel to this one for folding the flap in angled arrangement, such that this foldable closing flap will then extend off the panel and will no longer cover the corresponding opening. It is possible that the angled two parts of the flap are again arranged in one plane and are fold back to the opening to close it again.

It is further possible that the lid panel or also, for example, the U-web comprises a number of deformable areas for beverage identification. There are different possibilities for such areas, wherein, according to one embodiment, such deformable areas can be at least partially cross-cut and can be impressed. The cross-cut is used to simplify the pressing of the deformable areas in direction to the container/cup.

It was already outlined above that there is the possibility to connect particular parts of the paper lid, see for example the parts of the drink flange. It might be recommendable that for such a reason, at least parts of the paper lid that are connected to each other are provided with a sealable lacquer, varnish, sealable coating or the like. The paper may also be laminated with polyethylene, PE, polyethylenterephthalate, PET, or also polypropylene, or may be coated with a food grade varnish. Such material can at least be used for connecting corresponding parts of the paper lid to each other, but might also be used to improve the liquid density in case those parts come into contact with the beverage.

This means, in particular, for the connection the material might be used as a bonding agent and in case it is also applied to other parts of the lid, it can be used as a sealing agent.

With respect to the current application, it is in particular emphasized that just a single paper blank is used and that there is no necessity to shape two or more separate paper parts, which then have to be combined to obtain the final lid. Instead, according to the present application, just a single piece of paper like, for example, a disk is used and that is then shaped to the obtain the final product.

One possibility for deforming or shaping the paper blank is performing same by deep drawing and/or folding of the dry paper blank. This means that it is also not necessary to wet the paper or to use paper in a pre-paper form like, for example, a bath of paper fibers dispersed in water. In case such pre-paper form is used, the shaping is obtained in a mold where then the water content is evaporated and the shape is obtained by pressing this paper in a male-female mold.

According to the present application, it is obtained by forming the finished piece of paper, just choosing a dry paper having enough capacity of being deformed in a corresponding mold.

It was already said above that the paper lid may be stacked with other lids, wherein a corresponding nesting means might be provided by a space between the U-legs, the indentation and/or the transition portion of the second U-leg, see the different embodiments.

One part of the invention is, accordingly, the usage of such a single paper blank for shaping a paper lid of a paper container, in particular, a paper cup, in accordance with the other features already mentioned above. Also, the corresponding method for producing such a paper lid is quite different from any known method. First, a single and essentially flat paper blank is provided, which can, for example, be a disc or the like. This blank will then be deep drawn in a pressing means to form the flat lid panel and the first U-leg upwardly extending from the lid panel. Here, there will be a dry paper deformation without any liquid or the like added prior to deep drawing.

After this deep drawing step, there will be a portion of the blank essentially outwardly extending from the first U-leg. This will then be downwardly bent to form the U-web and the second U-leg.

Depending on the embodiment of the lid, it is then possible to seal upper portions of first and second U-legs to form the drink flange and/or to form the groove and indentation and/or to form the lower end flange.

Just one single piece of paper is used for the blank and, as there is such deep drawing technique to obtain the shaping of the product, the lid will generally have no potential points of discontinuity between different parts of the lid that it might responsible for potential leakages. Moreover, wrinkles are avoided as far as possible. The corresponding method according to the present application is a simple process not required to have to any assembling or two or more parts for forming the lid.

Furthermore, the sealing of the upper portions of first and second U-legs might be obtained by pressing both together and sealing same by activating some bonding agent internally positioned at least in this area, see the sealable lacquer, any pre-coating or the like. This pressing and sealing will then provide increased stability and also increased density of the corresponding lid.

In the following, advantageous embodiments of the lid are explained with respect to the accompanying figures.
Fig. 1 is an isometric view of a first embodiment of a lid according to the invention,
Fig. 2 is cross-section of the lid according to Fig. 2,
Fig. 3 is an enlarged part of the lid with fitting flange;
Fig. 4 is an isometric view of a second embodiment of a lid according to the present invention,
Fig. 5 is a cross-section of the lid according to Fig. 4;
Fig. 6 is an isometric view of a third embodiment of lid according to the present invention;
Fig. 7 is a cross-section of the lid according to Fig. 6,
Fig. 8 is an enlarged view of section "X" of Fig. 7;
Fig. 9 is a cross-section of stacked lids;
Fig. 10 is an enlarged view of part "Y" of Fig. 9;
Fig. 11 is an isometric view of a fourth embodiment of a lid according to the present invention,
Fig. 12 is a cross-section of the lid according to Fig. 11;
Fig. 13 is an enlarged view of part "X" of Fig. 12;
Fig. 14 is cross-section of stacked lids;
Fig. 15 is an enlarged view of part "Y" of Fig. 14;
Fig. 16 is a top view of the lid according to the present application, and
Fig. 17 is an illustration of different steps of forming a lid according to the present application, see in particular the lid according to Fig. 12.

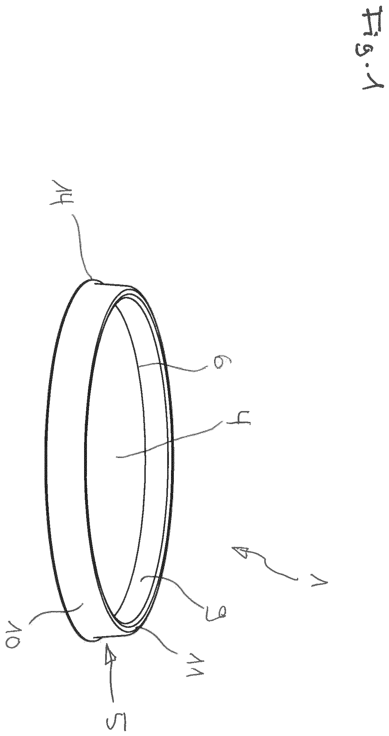

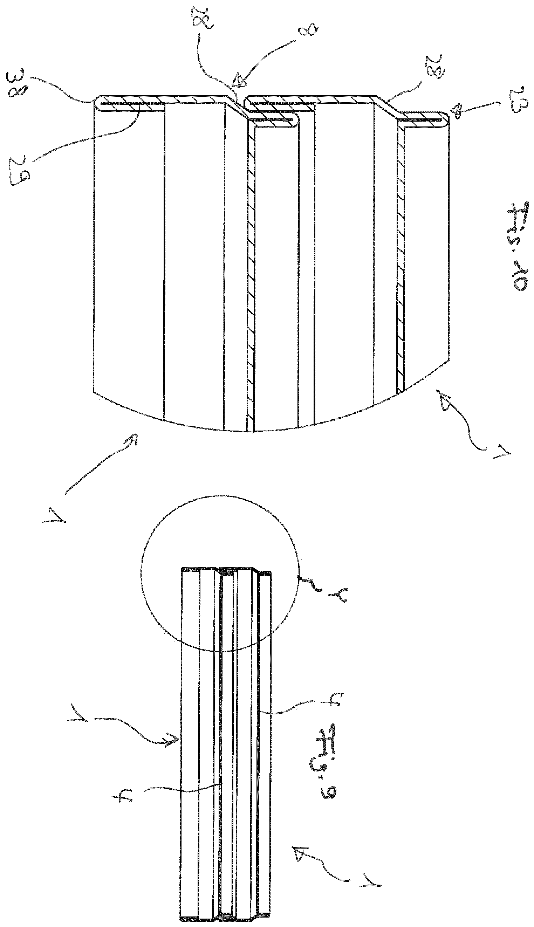

In Fig. 1, an isometric view of a first embodiment of a paper lid 1 is illustrated. The paper lid has a circular shape with a central and essentially flat lid panel 4. Along a circumference 6 of this lid panel, a fitting flange 5 is arranged that is used for interlocking with an upper rim of a container or cup. Simultaneously, this fitting flange also provides a nesting means 8 for stacking lids, see for example Figs. 9 and 10 or Figs. 14 and 15.

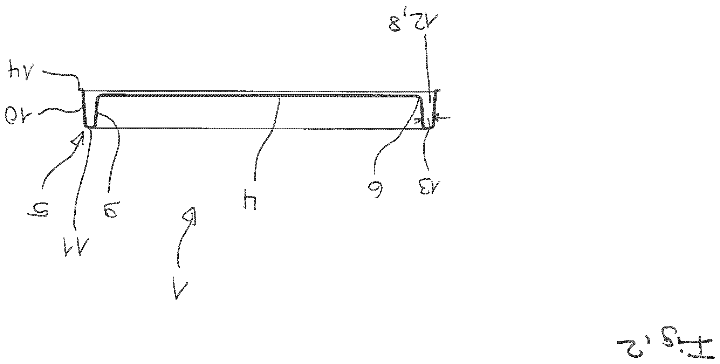

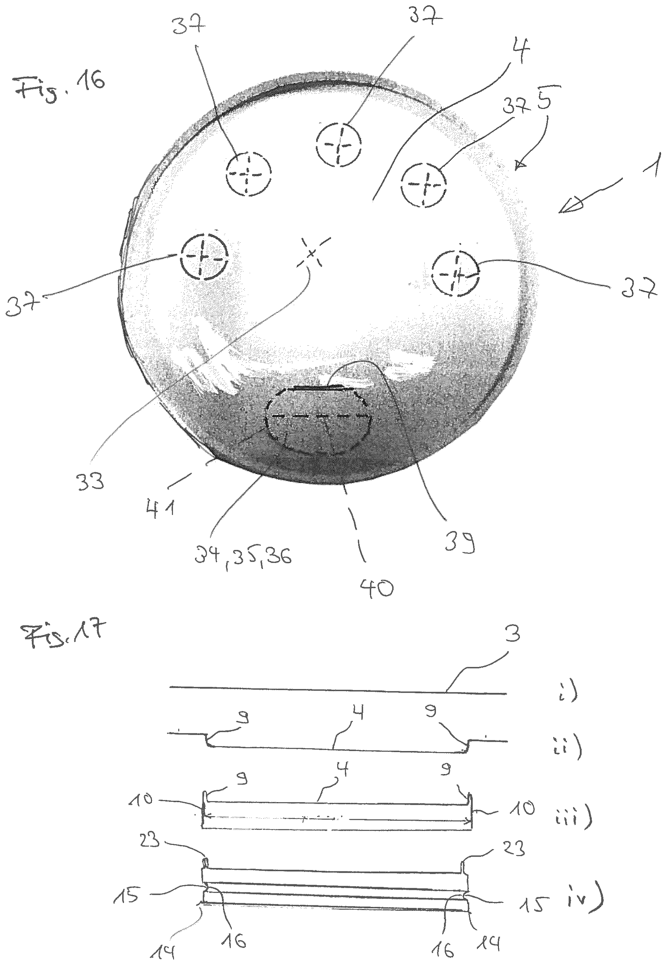

The corresponding paper lid 1 is made of a single paper blank 3, see Fig. 17, which generally is a disc in case a circular paper lid is produced. The corresponding outer fitting flange 5 comprises a first U-leg 9, a second U-leg 10 and U-web 11 connecting both, see also Fig. 2. Fig. 2 represents a cross-section of the lid in Fig. 1. It is, in particular, illustrated that the fitting flange is arranged at the radial ends of the lid panel 4 and extends in vertical direction above a plane of the lid panel. Corresponding first U-leg 9 is slightly inclined to the outside with respect to the lid panel 4 and has a slightly rounded end to which the corresponding U-Web 11 is connected. This, in general, extends in horizontal direction and is then connected by also a slightly rounded edge to the outer second U-leg 10 extending downwardly. The length of the second U-leg 10 is greater than the corresponding length of the first U-leg, such that the second U-leg extends further downwards than the arrangement of the corresponding lid panel 4. According to the embodiment in Figs. 1 and 2, the second U-leg 10 comprises at its lower end an outwardly extending end flange 14.

Between first and second U-leg 9 and 10, a conical groove 12 is formed, wherein, according to the embodiment illustrated in Figs. 1 and 2, the two U-legs are slightly inclined, such that a width 13 of the conical groove increases in downward direction.

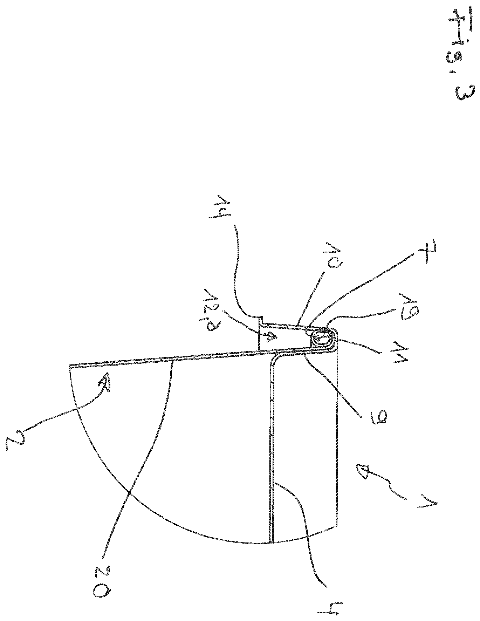

The corresponding conical groove 12 is used for arranging an upper rim 7, see Fig. 3, therein.

Fig. 3 corresponds to an enlarged view of one left part of the lid according to Fig. 2 and, in particular, illustrates the fitting of the paper lid 1 on to a corresponding paper container or paper cup 2. A corresponding paper container/cup 2 is generally known in the art and comprises a truncated cup body with corresponding container wall 20 that comprises at an upper end the outwardly curled upper rim 7. In case the paper closes an upper opening of such container/cup the upper rim 7 is introduced into the conical groove, such that it is generally in abutment by an inner surface of the first U-leg, the U-leg and the U-web, 9, 10 and 11. To provide a sufficient dense fitting with respect to this upper rim 7 of the container/cup 2, the corresponding width 13 of the conical groove 12 may be slightly smaller than a corresponding diameter 19 of the upper rim 7, such that this is closely held at the upper end of the conical groove 12. Moreover, the corresponding conical groove 12 also represents a nesting means 8 used for stacking a number of lids one upon the other, see also other embodiments, for example Figs. 9 and 10 or Figs. 14 and 15. According to the conicity of the corresponding groove 12, it is possible to introduce the fitting flange 5 of another paper lid 1 into the corresponding lower opening of the conical groove for stacking.

This means that the corresponding fitting flange is used for closing a corresponding container/cup, but is also used for stacking a number of lids one upon the other.

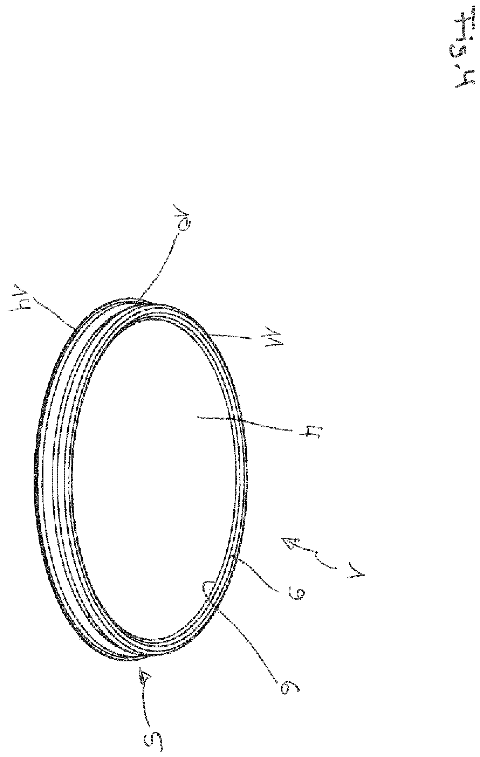

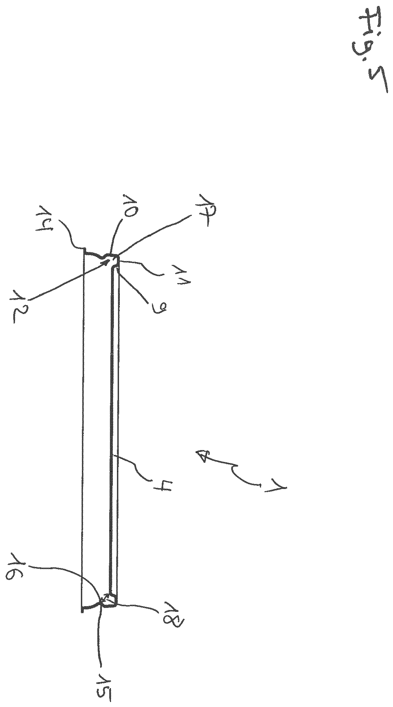

A second embodiment of the paper lid according to the present invention is illustrated in Figs. 4 and 5. The paper lid of this embodiment, as, of course, also all the other embodiments, is always made of a single paper blank comprising a central and essentially flat lid panel 4 and corresponding outer fitting flange along a circumference 6 of the lid panel, see reference numeral 5, for example, in Fig. 4.

The fitting flange 5 again comprises a first and a second U-leg 9, 10 and a U-web 11. This is further illustrated in Fig. 5, which represents a cross-section of the lid illustrated in Fig. 4.

In comparison to the embodiment illustrated in Fig. 2, the corresponding lid panel is less embossed, which means it is arranged in a greater distance to a lower end of the second U-leg 10 or its corresponding end flange 14. Consequently, the conical groove 12 is smaller in Figs. 4 and 5, but is still used for receiving an outwardly curled upper rim 7 of a corresponding container/cup 2, see also Fig. 3. The first U-leg 9 is quite short compared to the first embodiment and is then again connected by an essentially horizontal U-web 11 to the outer and second U-leg 10. This has first a portion quite similar to the first embodiment with a groove 15 is arranged in an outer surface of the U-leg 10, which results in an inwardly protruding indentation 16.

Between this indentation 16, the upper part of the second U-leg 10, the U-web 11, and the first U-leg 9, a restriction space 17 is formed, which is used for receiving the corresponding upper rim 7 of the container/cup. Below the corresponding groove 15, the second U-leg 10 can extend in the same direction as the upper of this section U-leg 10 arranged between groove 15 and the U-web 11. It is also possible that the inclinations of those two parts of the second U-leg are different. At a lower end of the second U-leg 10, again an outwardly extending end flange 14 is arranged. This may extend in horizontal direction, but may also be downwardly inclined.

A corresponding distance 18 between the indentation 16 and a lower end of the first U-leg 9 is generally smaller than a corresponding diameter of the upper rim, such that there is some feedback to a user of the lid when this is fitted onto the rim of the container/cup. It is also possible, see also the other embodiments, that there will be some audible snapping effect in fitting onto the rim because of the snapping back of the second U-leg 10 after passing the indentation 16 by the rim and pressing said rim in the restriction space 17.

The lids according to the present application may be used for generally cold beverages, wherein it is also feasible to use same for warm or hot beverages.

Compared to the first embodiment, the lid of the second embodiment has a central panel that is not as deeply embossed and further provides the second U-leg 10 with a corresponding indentation shaped to create a particular locking effect on the rim of the container/cup after inserting same into the restriction space 17.

Moreover, see also the following embodiments, there may be some audible snapping effect as feedback to the user to ensure the correct fitting of the lid with respect to the container/cup.

According to all embodiments of the present application, it is possible to refit the lid more than once on the same cup, as, in particular, the fitting flange 5 is shaped in such a way that it will lose strength when fitted multiple times on the cup.

According to the embodiment of Fig. 5 and the particular arrangement of the lid panel 4 in comparison to the first embodiment, there will be no particular reduction of volume capacity of the container/cup, as the lid panel is not so deeply inserted into a corresponding opening of the cup, such that there will be a reduction of full brim volume.

It is also a particular of all embodiments of the present application that the lids are not dependent on the cup size. In general, the same lid can be used for different cups sizes having different conicities, but essentially have the same opening diameter, see the corresponding container wall 20 in Fig. 3, such that the same lid might be used for fitting on all available cup sizes, even in case the conicity of the container walls are different. This is, in particular, due to the material of the lid and also to the particular shaping of the fitting flange, which has some elasticity in the U-legs, in particular, in case corresponding groove 15 is used, such that just one lid might be used for different cup sizes.

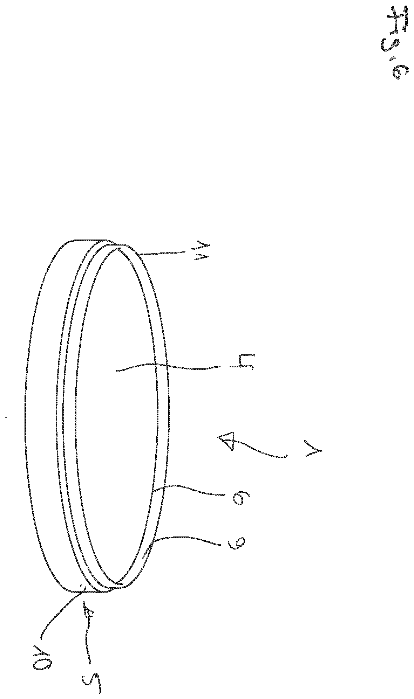

Fig. 6 is an isometric view of a third embodiment of a paper lid 1 according to the present application. Again, this paper lid 1 comprises a central and essentially flat lid panel 4 surrounded by a fitting flange 5 comprises a first U-leg, a second U-leg and a U-web, see reference numerals 9, 10 and 11.

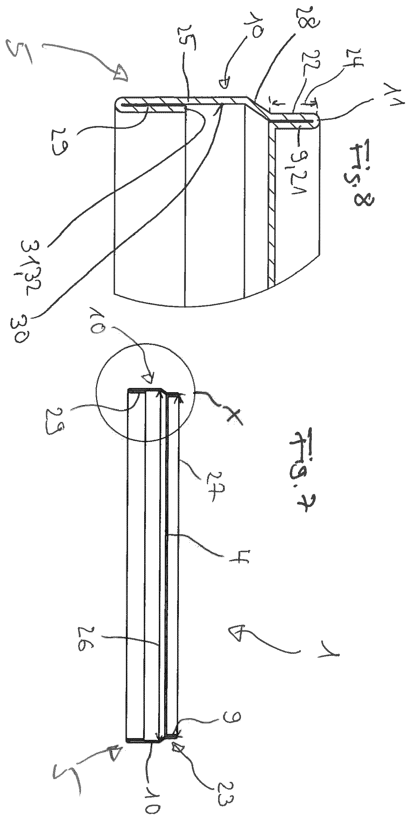

Fig. 7 represents a cross-section view of the lid according to Fig. 6. Fig. 8 is an enlarged view of detail "X" in Fig. 7 and the following description refers to both figures 7 and 8.

Similar to the second embodiment, the corresponding lid panel is arranged in a similar relation with respect to the fitting flange 5, which means that the first U-leg 9 is quite shorter than the second U-leg 10.

In this embodiment and also in the following embodiment, a first U-leg 9 and, in particular, and upper portion 21 of same is in abutment with an upper portion 22 of the second U-leg 10, wherein it is also possible that all of the first U-leg 9 is this upper portion 21, which is in abutment and also connected to corresponding upper portion 22 of the second U-leg 10. This means that the two U-legs 9 and 10 are pressed together in this part and may be connected to each other. This means that the corresponding U-web 11 is just the curved part at the top of the corresponding fitting flange 5. A length 24 of the corresponding parts may correspond to the length of the U-leg 9, wherein this compressed part of the fitting flange 5 forms some kind of drink flange 23. This extends above the corresponding lid panel 4 and might be used for supporting any drinking of beverages from within the container/cup through a corresponding opening of the lid panel 4.

The outer and second U-leg 10 further comprises a lower portion 25 that is connected to the upper portion 22 by an outwardly inclined transition portion 28. Accordingly, an inner diameter 26 of the lower portion 25 is bigger than a corresponding inner diameter 27 of the corresponding drink flange 23 or even longer than an outer diameter of this drink flange 23, such that the drink flange from another lid may be inserted in the corresponding space below the lid panel 4, see in particular Figs. 9 and 10, such that the drink flange 23 and the transition portion 28 as parts of the fitting flange 5 form a nesting means 8 for stacking containers one above the other, see in particular Figs. 9 and 10.

In general, the corresponding portions of first or second U-legs are parallel to each other besides the corresponding transition portion 28 that connects the upper portion 22 of the second U-leg 10 with its lower portion 25. One particular feature of this third embodiment of a paper lid 1 according to the present application is the inwardly folded end portion 29 as part of the second U-leg 10. This inwardly folded end portion 29 can be in abutment with an inner surface 30 of the unfolded second U-leg 10 and also be connected to same. An upper end 32 of this end portion 29 is an interlocking means 31 cooperating with a corresponding outwardly curled upper rim 7, see Fig. 3 of the corresponding container/cup. This means that the interlocking means 31 will form some kind of resistance in case the lid is released from the cup and may also provide the corresponding audible snapping effect already mentioned above when this part of the second U-leg 10 is again snapping back radially inwardly after passing the upper rim 7. Moreover, corresponding lid 1 according to this third embodiment is stiffer and more often usable because of this connection of the fitting flange 5 at the drink flange 23 or in the region of the inwardly folded end portion 29.

Simultaneously, the corresponding inwardly folded end portion 29 of the U-leg 10, a lower end 38 of the U-leg 10 and corresponding transition portion 28 form the corresponding nesting means 8, see in particular Figs. 9 and 10 for stacking lids one above the other. Fig. 9 a cross-section of two stacked lids and Fig. 10 represents an enlarged view of detail "Y" of Fig. 9. The description already provided with respect to Figs. 7 and 8 is also valid for Figs. 9 and 10 and the only new feature is the stacking of two lids, as illustrated in Figs. 9 or 10. It is, of course, also possible to stack more of the lids in an analogous way, as already illustrated in Figs. 9 and 10.

The corresponding drink flange 23 is arranged in such a way that inwardly folded end portion 29 just fits on the corresponding drink flange 23 and will abut from above with the corresponding transition portion 28 to provide the stacking. Moreover, there is some resistance in the stacking because of this abutment between drink flange 23 and inwardly folded end portion 29. Nevertheless, it will be possible to remove the upper lid from the lower lid by just one hand of the user to fit a corresponding lid onto an upper rim of a container/cup.

Moreover, according to Figs. 9 and 10, the outer appearance of stacked lids is such that they have some common outer circumferential surface, which simplifies the stacking and also the unstacking of corresponding lids.

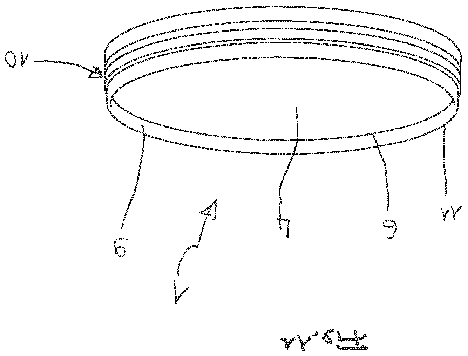

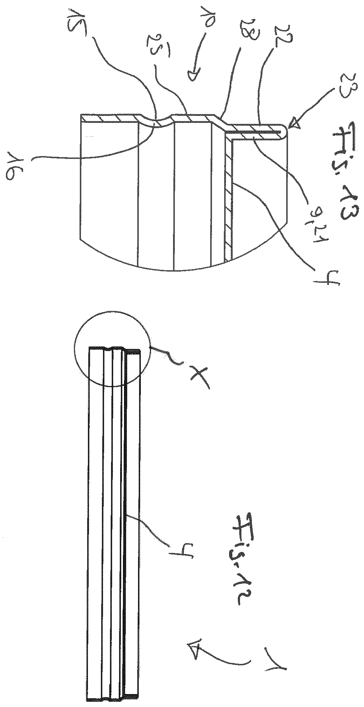

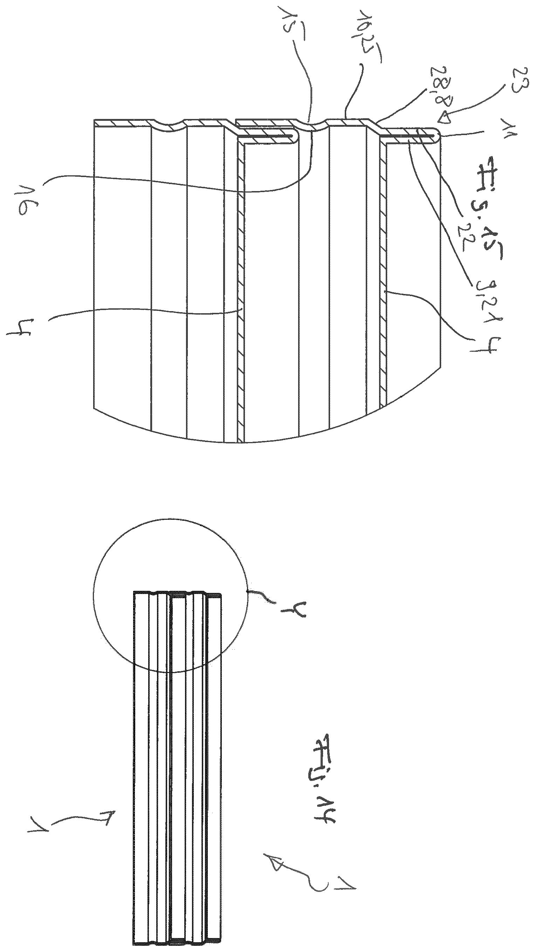

Figs. 11 to 15 represent a fourth embodiment of a paper 1 according to the present application. The lid is, in general, quite similar to the third embodiment besides the replacement of the inwardly folded end portion 29 by a corresponding groove 15 similar to the embodiment in Fig. 5. The overall length of the second U-leg 10 according to this fourth embodiment is, in general, the same as the overall length according to the third embodiment, see for example Figs. 8 and 13 in comparison. Moreover, also the fourth embodiment has a corresponding drink flange 23, a transition portion 28 and a lower portion 25 of the second U-leg 10 extending in the same relation with respect to the first U-leg 9 or the drink flange 23. Only in approximately the middle of the lower portion 25, there is a corresponding groove 15 in its outer surface resulting in an inwardly protruding indentation 16 again already outlined with respect to the second embodiment. There is also a corresponding nesting means 8, see Figs. 14 and 15, used for stacking corresponding lids, wherein again the transition portion 28 is used as such nesting means on which a lower end of the lower portion 25 of the second U-leg 10 is supported, see in particular Fig. 15. Fig. 15 represents an enlarged view of detail "Y" of Fig. 14, wherein Fig. 14 corresponds to a cross-section, as already illustrated in Fig. 12, only for two stacked lids 1.

The corresponding parts of the lower portion 25 of the second U-leg 10 above and below the groove 12 extends in the same vertical direction and are arranged parallel to corresponding upper portions 21 and 22 of first or second U-legs 9, 10.

It is, of course, also possible that each of the illustrated embodiments comprise a corresponding end flange 14, see first and second embodiments.

With respect to all of the embodiments of the lids, it is again emphasized that they are not produced with two, three or more pieces, but are shaped from one single piece of paper, for example, a paper disc. The fourth embodiment is again using a corresponding groove 15 or indentation 16 for engaging the upper rim of the container/cup and the last embodiment provides some vertical sealing, see the inwardly folded end portion, to create a constriction, see in particular upper end 32, for a corresponding upper rim of the container/cup. One particular advantage of using just a single piece of a blank is the absence of potential points of discontinuity between different parts assembled to form the lid. Such points of discontinuity can, of course, be responsible for potential leakages. By using just one single paper blank, the production process is simplified as, for example, it is not necessary to assemble two or more parts.

According to the present application, it is also possible to use some additional material at least in places of the blank used, for example, to connect corresponding parts, see drink flange 23 or inwardly folded end portion 29. Such sealable bonding agent might be arranged in only those areas used for connecting and can be a material like a sealable lacquer, varnish, sealable coating or the like. During manufacturing of the lid, it then might be possible that those sealing or bonding agents will be slightly heated and then pressed together to provide a sufficient sealing and connecting of corresponding parts. It is, of course, also possible to apply the sealable bonding agent directly prior to pressing, such that no further heating is necessary.

With respect to the single paper blank, it also has to be emphasized that this is used in a dry state. It is not necessary to use any molded fiber technology, wherein starting from a plurality of paper fibers dispersed in water to then shape the corresponding material and evaporate the water content. In general, the water content of such material is as high as 99 percent or even more.

According to the present application, the lid is obtained by just forming a dry piece of paper that is big enough to have the capacity of being deformed in the mold to obtain the corresponding lid according to one of the embodiments.

Each of the corresponding lids according to the present application may have some further features, in particular, arranged in the lid panel, see for example the top view of a corresponding lid 1 in Fig. 16. The corresponding features may be used together or separately for a corresponding lid. One group of features concern deformable areas 37 used for identifying a corresponding beverage inside the cup. Those deformable areas 37 have, for example, a circular shape and may be impressed. To support the possibility of impressing the deformable areas, they may cross-cuts like "+". Such cross-cuts may be completely cut through the paper material of the lid panel or may also only be half cut or the like, such that there is small force necessary for impressing the deformable areas 37.

Moreover, there might be some means arranged in the lid panel used for sipping any beverage inside a container/cup through the lid. One possibility is, for example, a cross-cut 33 generally in the middle of the lid panel that might be used for inserting a straw. Another possibility is an open sip hole 34 or corresponding part of the lid panel as a pre-cut 35 that first closes the sip hole and which might be totally removable to open the sip hole. This means that there might be an open sip hole or a closed pre-cut of such sip hole to provide some means to be used by a user to drink beverage through the lid panel. Another possibility is a foldable flap 36 that also first closes a corresponding sip hole, but is connected to the rest of the lid panel by a bending 39 and by some perforation 41. Along the perforation 41, the flap 36 may be pressed into the container along the bending line 39. It is then possible to move the flap 36 back, such that it protrudes upwardly from the lid panel and it is possible that the flap 36 has a further bending line 40 that might be used for folding the flap 36 to just have generally the half size. This means that a portion of the flap 36 might be folded along the bending line 40 on the other portion, such that there is only half of the flap 36 is protruding from the lid panel. Such folded flap may again be unfolded along the bending line 40 and folded back to close the sip hole by using the other bending line 39. It is also possible that in case of pre-cut 35 or flap 36, some handle is arranged on this part of the lid panel to support and removal or movement of corresponding pre-cut or flap.

In Fig. 17, some process steps i) to iv) are illustrated used for manufacturing one particular embodiment of the lid, see in particular the embodiment according to Figs. 12 to 15. However, the corresponding process steps are also usable for the other embodiments, see in particular the third or also the second or first embodiments, wherein only, in particular, the last process step has to be adapted in view of the corresponding embodiments.

In a first step i) of the method, a piece of flat paper is provided with a corresponding shape corresponding to the shape of the lid. In case the lid, for example, has s circular shape, then a disc-like paper may be used. In a second step ii), this piece of paper is then inwardly pressed to form lid panel 4 and, for example, the first U-leg 9. For this, a male and a female mold may be used. In a third step iii), the radially outwardly extending part of the paper blank 3 extending from the first U-leg 9 is downwardly bended, wherein corresponding steps are used for all embodiments of the lids, see corresponding figures. In a further step iv), it is then possible to press an upper portion of the second U-leg 10 inside to be in abutment with the corresponding first U-leg 9 and to simultaneously connect same to form the drink flange 23. In the same step, it is also possible to inwardly fold the corresponding end portion 29 or to form a corresponding groove 15 resulting in indentation 16. In the case of the inwardly folded end portion 29, there might be again a pressing of this together with the unfolded part of the second U-leg 10 and also a connecting of same by using corresponding material, as mentioned above.

Also in the same step, see step iv), it is possible to form the corresponding end flange 14 depending on the particular embodiment of the lid to be produced.

## Claims

1. Paper lid (1) for a paper container (2) such as a paper cup made of a single paper blank (3), said lid comprising a central and an essentially flat lid panel (4) and an outer fitting flange (5) provided along a circumference (6) of the lid panel (4), said fitting flange interlocking with an upper rim (7) of the container (2) and providing a nesting means (8) for stacking lids.

2. Paper lid according to claim 1, wherein said fitting flange (5) has an inverted U-shape with a first U-leg (9) upwardly extending from the lid panel (4), a second U-leg (10) (10) downwardly extending and a U-web (11) connecting first and second U-leg (10).

3. Paper lid according to claim 1 or 2, wherein said fitting flange (5) has a conical groove (12) increasing in width between first and second U-leg (9, 10) from the U-web (11) in downward direction.

4. Paper lid according to one of the previous claims, wherein the second U-leg (10) is longer than the first U-leg (9), and wherein the second U-leg (10) in particular includes an outwardly extending end flange (14).

5. Paper lid according to one of the previous claims, wherein one U-leg (9, 10) extends essentially in vertical direction and the other U-leg (10, 9) is inclined.

6. Paper lid according to one of the previous claims, wherein the second U-leg (10) comprises a groove (15) within its outer surface resulting in an inwardly directed indentation (16), and in particular a restriction space (17) is formed between the second U-leg (10) above the indentation (16), the U-web (11) and the first U-leg (9).

7. Paper lid according to one of the previous claims, wherein a distance (18) between indentation (16) and first U-leg (9) is smaller than a diameter (19) of the upper rim (7) of the container (2).

8. Paper lid according to one of the previous claims, wherein the lid (1) is a multifit lid and in particular first and/or U-legs (9, 10) are elastically deflectable to be adaptable to different inclinations of a container wall (20).

9. Paper lid according to one of the previous claims, wherein upper portions (21, 22) of first and second U-leg (9, 10) are pressed together and/or are connected to each other to obtain an upwardly extending drink flange (23).

10. Paper lid according to one of the previous claims, wherein the length (24) of the drink flange (23) corresponds essentially to the length of the first U-leg (9), and/or wherein a lower portion (25) of the second U-leg (10) has an inner diameter (26) bigger than an inner diameter (27) of the upper portion (22) of the second U-leg (10) as part of the drink flange (23).

11. Paper lid according to one of the previous claims, wherein an outwardly inclined transition portion (28) is arranged between lower and upper portions (22, 25) of the second U-leg (10).

12. Paper lid according to one of the previous claims, wherein the lower portion (25) of the second U-leg (10) extends essentially in vertical direction, and/or the groove (15) is formed in the lower portion (25) of the second U-leg (10) in particular in the middle of the lower portion.

13. Paper lid according to one of the previous claims, wherein the lower portion (25) of the second U-leg (10) extends essentially in vertical direction and comprises an inwardly folded end portion (29), wherein the end portion (25) of the second U-leg (10) is, in particular, in abutment with an inner surface (30) of the non-folded second U-leg (10).

14. Paper lid according to one of the previous claims, wherein the end portion (29) and the non-folded second U-leg (10) are connected to each other.

15. Paper lid according to one of the previous claims, wherein upper end (32) of the end portion (29) is an interlocking means (31) for the rim (7) of the container (2).

16. Paper lid according to one of the previous claims, wherein the lid panel (4) comprises a crosscut (33) for a straw, a sip hole (34), an openable precut (35) and/or an in particular foldable closing flap (36), and/or wherein the lid panel (4) comprises a number of deformable area (37) for beverage identification.

17. Paper lid according to one of the previous claims, wherein the deformable areas (37) are at least partially cross-cut and can be impressed.

18. Paper lid according to one of the previous claims, wherein at least parts of the paper lid (1) that are connected to each other are provided with a sealable lacquer, varnish, sealable coating or the like.

19. Paper lid according to one of the previous claims, wherein any deformation of the paper blank (3) for shaping the paper lid (1) is performed by deep drawing and/or folding of a dry paper blank.

20. Paper lid according to one of the previous claims, wherein the nesting means (8) is provided by a space between the U-legs (9, 10), the indentation (16), and/or the transition portion (28) of the second U-leg (10).

21. Usage of a single paper blank for shaping a paper lid (1) of a paper container (2), in particular a paper cup according to one of the previous claims.

22. Method for producing a paper lid (1) according to one of the previous claims, comprising the steps of
i) providing a single, essentially flat paper blank (3);
ii) deep drawing the blank (3) in a pressing means to form the flat lid panel (4) and the first U-leg (9) upwardly extending from the lid panel (4);
iii) downwardly bending a portion of the blank (3) essentially outwardly extending from the first U-leg (9) to form the U-web (11) and the second U-leg (10), and
iv) sealing upper portions (21, 22) of first and second U-leg (9, 10) to form the drink flange (23) and/or forming the groove (15) and indentation (16) and/or forming the lower end flange (14).
